# FASCICULE DE BREVET EUROPEEN

(11) **EP 0 821 556 B1**
(45) Date de publication et mention de la délivrance du brevet: **31.10.2001**
(21) Numéro de dépôt: 96913575.5
(22) Date de dépôt: 12.04.1996
(51) Int. Cl.: A23L 1/315, A47J 27/10

(54) **PROCEDE DE CUISSON D'UN ALIMENT TEL QU'UN FOIE GRAS ENTIER OU UN POISSON, ET NECESSAIRE POUR LA MISE EN UVRE DE CE PROCEDE**
VERFAHREN ZUM KOCHEN EINES NAHRUNGSMITTELS, WIE GANZLEBERPASTETE UND ANORDNUNG DAFÜR
METHOD FOR COOKING FOOD SUCH AS A WHOLE FOIE GRAS OR A FISH, AND EQUIPMENT THEREFOR

(30) Priorité: 18.04.1995 FR 9504587
(43) Date de publication de la demande: 04.02.1998
(73) Titulaire: Vieira Da Silva, Jorge, 75017 Paris (FR)
(72) Inventeur: Vieira Da Silva, Jorge, 75017 Paris (FR)
(74) Mandataire: Dupuis-Latour, Dominique
(86) Numéro de dépôt international: FR9600554
(87) Numéro de publication internationale: WO9632853

(56) Documents cités:
- DE-U- 8 814 507
- FR-A- 2 595 916
- FR-A- 2 619 680
- GB-A- 2 049 400
- US-A- 4 331 127

## Description

L'invention concerne la cuisson des aliments à faible température (de l'ordre de 50 à 80 °C), tout particulièrement celle des foies gras et des poissons. Elle concerne également, dans le cas d'aliments surgelés, la maîtrise de l'enchaînement décongélation-réchauffage-cuisson.

Si l'on prend le cas du foie gras, celui-ci peut être préparé de diverses façons, selon la température et la durée de la cuisson : frais, mi-cuit ou en conserve. Ces différents degrés de cuisson conduisent à des qualités gustatives et des propriétés de conservation différentes.

S'il est relativement aisé de réaliser des conserves domestiques de foie gras par cuisson à coeur à température élevée (plus de 110 °C, conduisant à une stérilisation du produit), il est beaucoup plus délicat d'obtenir un foie gras mi-cuit présentant des qualités gustatives satisfaisantes. En effet, il faut à la fois éviter une cuisson insuffisante, qui n'atteindrait pas le coeur du foie (les foies mi-cuits étant en général cuisinés entiers ou en volume important, par exemple dans des terrines) et d'autre part une cuisson excessive qui dégraderait les arômes, saveurs et parfums qui font l'attrait de ce produit.

Le foie gras mi-cuit suscite un engouement croissant auprès des consommateurs compte tenu de ses qualités gustatives exceptionnelles, lorsque sa préparation est convenablement effectuée.

Cette préparation délicate peut être maîtrisée de façon assez satisfaisante à l'échelle industrielle ou artisanale, et l'on trouve couramment des foies gras mi-cuits présentés à la vente en bocal, en boîte métallique ou conditionnés sous vide.

La préparation domestique du foie gras mi-cuit est cependant beaucoup plus délicate à maîtriser, avec une part d'empirisme importante et donc des risques d'échec ou de mauvaise maîtrise des qualités du produit final. Elle est généralement réalisée par cuisson dans une terrine placée dans un four, ou dans un bain-marie au four, ou dans une terrine tenue au bain-marie, comme dans le FR-A-2 619 680, mais du fait des gradients de température importants, la cuisson est en pratique difficile à maîtriser et à obtenir de façon homogène et reproductible, avec notamment un risque de cuisson excessive de la totalité ou des régions périphériques du foie.

Compte tenu de l'engouement actuel pour les préparations domestiques et de la disponibilité de plus en plus grande de foies crus sur le marché, le besoin se fait sentir de pouvoir réaliser de façon facile et fiable de terrines de foie gras "mi-cuit", c'est-à-dire de préparations non appertisées, à des températures essentiellement comprises entre 50 et 75 °C, et susceptibles d'être mises en oeuvre sans habileté ni expérience particulières par le grand public (ou même par des professionnels) de façon fiable, simple et néanmoins parfaitement contrôlée.

Si l'on prend maintenant le cas des poissons, s'ils peuvent se cuire à forte température sans dommage pour les qualités nutritives et gustatives, de nombreuses recettes, notamment celles basées sur l'échange avec un milieu de cuisson comme un bouillon, ont avantage à être effectuées à basse température, au maximum à 95 °C (à l'instar de la cuisson à la vapeur). Il est reconnu que la cuisson d'un poisson en dessous de la température d'ébullition de l'eau conserve toutes les propriétés à l'aliment. La recette qui consiste à plonger un poisson dans un bouillon, à couper la source de chaleur, et à le laisser cuire par simple échange thermique avec son milieu de cuisson est connue, mais très difficile à contrôler au niveau de la durée et de la qualité finale de la cuisson : si l'on laisse cuire trop longtemps (pour une grosse pièce), l'ensemble refroidit rapidement, si l'on ne laisse pas assez longtemps, la cuisson peut être insuffisante. Le développement de l'attrait pour le poisson, en particulier avec l'amélioration des moyens de distribution, rend particulièrement intéressant un procédé de préparation adapté à la maîtrise du cycle de cuisson.

Si l'on prend enfin le cas des aliments surgelés, la décongélation suivie de réchauffage et, le cas échéant, de cuisson d'un aliment est souvent effectuée dans un four à micro-ondes, avec la nécessité d'enchaîner deux, voire trois, modes distincts, d'où une maîtrise délicate des temps et des puissances, qui varient d'un appareil à l'autre. La possibilité de contrôler ce cycle de manière aisée ouvre la voie à une consommation de produits surgelés avec la qualité qui est attendue par les gourmets, sans compromis entre la fraîcheur et la qualité de cuisson. La diffusion des produits surgelés est en croissance très forte, et l'amélioration et la facilitation de procédés de préparation contribuerait encore à ce développement.

Dans ces trois cas, représentatifs mais non exclusifs du domaine d'application de l'invention, on cherche, d'une part, à maîtriser la température de traitement des aliments, en vue de leur réchauffage et/ou de leur cuisson, dans une gamme de températures allant de 50 à 80 °C, et d'autre part à faciliter la mise en oeuvre par des utilisateurs occasionnels, sans risques d'erreur au niveau du procédé de cuisson, laissant un maximum de latitude pour la recette de base.

La présente invention propose un procédé permettant d'atteindre ces buts, ainsi qu'un nécessaire pour la mise en oeuvre de ce procédé, permettant de déterminer et contrôler avec précision l'apport de chaleur nécessaire à la cuisson en tenant compte de paramètres multiples tels que : la masse de l'aliment (foie, poisson) à cuire, la capacité calorifique de l'aliment et de la terrine, la température de cuisson et donc le degré de cuisson souhaité, la nature de l'aliment, les pertes thermiques diverses, etc.

À cet effet, le procédé de l'invention est caractérisé par les étapes énoncées dans la revendication 1. Les sous-revendications 2 à 7 en précisent des mises en oeuvre avantageuses

L'invention porte également sur un nécessaire pour la mise en oeuvre de ce procédé, comprenant les éléments énoncés par la revendication 8. Les sous-revendications 9 à 13 en précisent des formes de réalisation avantageuses.

On va maintenant décrire des exemples de mise en oeuvre de l'invention, en référence aux dessins annexés.

La figure 1 représente, en coupe, une mise en oeuvre particulière de l'invention dans laquelle on prévoit un récipient enfermant une terrine garnie de l'aliment à cuire (un foie dans cet exemple).

La figure 2 représente le récipient doseur du nécessaire de mise en oeuvre selon l'invention.

On va tout d'abord décrire le cas de la cuisson d'un foie gras.

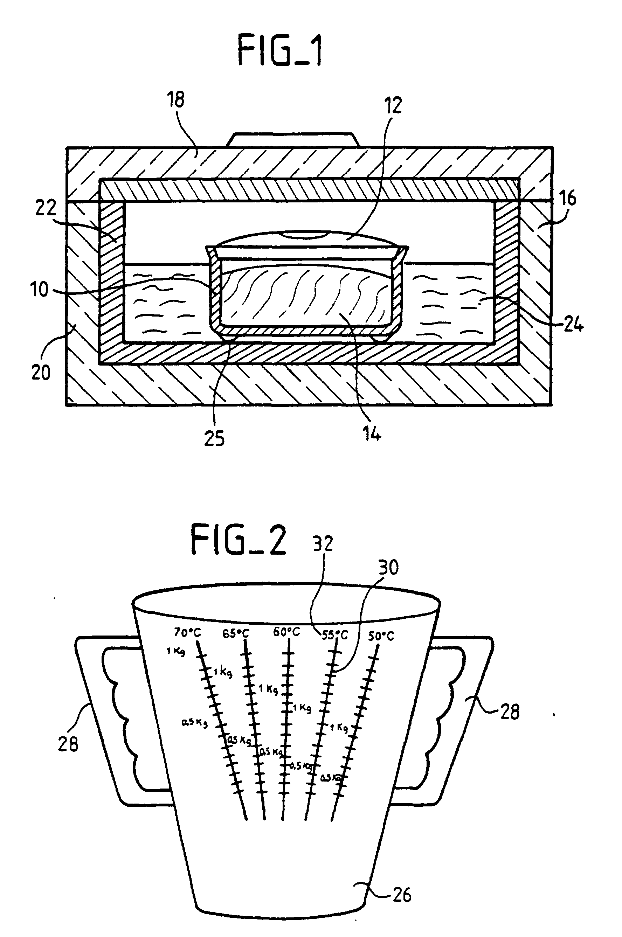

La mise en oeuvre de l'invention est effectuée comme illustré figure 1, où l'on a illustré une terrine 10 (qui est soit une terrine conventionnelle, ou tout autre récipient analogue permettant à la fois de cuire l'aliment et de le présenter pour sa consommation, soit une terrine spécifique, livrée avec les autres éléments du nécessaire de l'invention, dont les paramètres calorifiques sont parfaitement connus), fermée par un couvercle 12. Cette terrine contient l'aliment à cuire 14, qui est typiquement, comme on l'a indiqué plus haut, un foie gras, d'oie ou de canard.

Cette terrine est placée à l'intérieur d'un récipient 16 lui-même fermé par un couvercle 18, récipient et couvercle étant en un matériau thermiquement isolant 20 afin d'éviter, d'une part, les déperditions de chaleur pendant la cuisson et, d'autre part, tout échauffement excessif des parois extérieures, en permettant donc une manipulation aisée et sans risque par l'utilisateur.

Le volume intérieur du récipient 16 devra permettre l'immersion de la terrine 10 sans la recouvrir. Pour permettre la cuisson d'un foie dans sa terrine de volume f, le volume intérieur du récipient 16 doit être supérieur à f+e litres (e étant le volume d'eau versée) d'un facteur d'environ 1,5. Dans la pratique, cela revient à prendre pour le récipient 16 un volume d'environ trois fois le volume maximum de la terrine 10. En outre, pour assurer une bonne répartition thermique, il est souhaitable que le récipient 16 et la terrine 10 aient des dimensions sensiblement homothétiques entre elles.

Le récipient 16 peut éventuellement être garni intérieurement d'un matériau 22 du type à changement de phase, comme cela sera expliqué plus bas, de manière à aider au maintien de la température intérieure.

Le récipient 16 fermé par son couvercle 18 forme ainsi une enceinte calorifugée, de caractéristiques thermiques parfaitement connues, que l'on va remplir d'eau chaude 24, de préférence d'eau bouillante (car sa température est alors parfaitement déterminée) jusqu'à un niveau légèrement inférieur à celui de la terrine, de manière que l'eau vienne en contact avec la paroi de la terrine 10 et puisse céder sa chaleur à celle-ci et donc au foie 14 sur la majeure partie de la surface de la paroi.

La mise en oeuvre pratique montre qu'une quantité importante de chaleur est également cédée au travers du couvercle 12 du fait de l'atmosphère de vapeur régnant en partie supérieure de l'enceinte. On peut d'ailleurs éventuellement prévoir des moyens (non représentés) tels qu'un ventilateur pour forcer la convection au sein de ce volume de vapeur et ainsi renforcer les échanges thermiques entre la masse d'eau 24 et le dessus du foie 14, via le volume de vapeur et le couvercle 12. Le ventilateur peut être par exemple un ventilateur intégré au couvercle 18 et alimenté par une cellule solaire, ce qui évite de prévoir un moyen d'alimentation externe.

Pour la même raison, il est avantageux que la terrine soit pourvue de pieds support 25 propres à ménager entre le fond de la terrine et celui du récipient un intervalle où pourra pénétrer et circuler l'eau contenue dans ce récipient.

Le principe de l'invention consiste, compte tenu de la chaleur massique du foie gras, de la masse du foie à cuire, de la température ambiante (température de départ du foie avant cuisson) et des paramètres thermiques de la terrine, à déterminer une quantité d'eau bouillante permettant d'atteindre un équilibre thermique à la température souhaitée.

La chaleur massique c du foie gras est de l'ordre de 2,09 J.g.⁻¹°C⁻¹ (0,5 cal.g⁻¹.°C⁻¹), valeur que nous prendrons pour cet exemple, la différence entre oie et canard étant peu sensible. La chaleur massique de la terrine, habituellement en verre ou en faïence, est en pratique assez proche de celle du foie gras, et l'on pourra faire l'approximation consistant à prendre pour les calculs le poids brut foie plus terrine, quitte à apporter éventuellement un facteur correcteur, déterminé par l'expérience, pour le réchauffage de l'intérieur du récipient. Ce facteur correcteur sera pris en compte dans les graduations du récipient doseur que l'on décrira ci-dessous.

La chaleur massique de l'eau étant de 4,18 J·g^{.-1}°C⁻¹ (1 cal.g⁻¹.°C⁻¹), pour amener une masse m (en grammes) à la température t à partir d'une température ambiante de 20 °C, il faut une quantité d'eau à 100 °C égale à : e = c.m (t-20) / (100-t), soit un volume d'eau, en cm³, déterminé par le tableau suivant (m étant le poids en grammes de la terrine et du foie) :

| t (°C) | e (cm³) |
|---|---|
| 50 | m x 0,30 |
| 55 | m x 0,39 |
| 60 | m x 0,50 |
| 65 | m x 0,65 |
| 70 | m x 0,85 |
| 75 | m x 1,10 |

La détermination de cette quantité d'eau peut être aisément obtenue sans calcul par l'utilisateur si celui-ci utilise un récipient doseur tel que celui illustré figure 2, c'est-à-dire un récipient 26 pourvu d'anses de préhension 28, réalisé en matériau transparent ou translucide et portant une pluralité de graduations 30 correspondant chacune à une température de cuisson déterminée, repérée en 32, qui sera choisie par l'utilisateur en fonction de la nature du foie (50 à 65 °C pour le foie de canard, 60 à 75 °C pour le foie d'oie) et du degré de cuisson souhaité. Chacune des échelles de graduation indique, selon le cas, soit la masse de l'ensemble terrine + foie (avec un éventuel facteur correcteur pour tenir compte des pertes thermiques du système, comme on l'expliquera plus bas) lorsque la terrine est une terrine conventionnelle dont les paramètres calorifiques sont inconnues, soit la masse du foie seul lorsque la terrine est une terrine spécifique, livrée avec les autres éléments du nécessaire de l'invention, et dont les paramètres calorifiques sont parfaitement connus. De la sorte, il suffit à l'utilisateur d'effectuer une pesée, de choisir la température de cuisson, de remplir le récipient doseur de la quantité d'eau bouillante (100 °C) indiquée pour ces deux paramètres, et enfin de verser cette quantité d'eau bouillante dans le récipient 16.

L'autre facteur essentiel d'une cuisson satisfaisante est le maintien de la température recherchée pendant la durée de la cuisson.

Dans la pratique, la terrine sert d'écran thermique au foie pour le protéger de la surchauffe superficielle lors du versement de l'eau bouillante et au cours de la phase de stabilisation thermique, la surchauffe se situant alors essentiellement au niveau des parois de la terrine. On ne constate pas en pratique de cuisson excessive de la périphérie du foie ou de cuisson insuffisante du coeur du foie en raison de cette phase transitoire très brève, et l'on considérera que l'équilibre thermique du système est atteint de façon pratiquement immédiate.

Le temps de cuisson du foie dépend de la masse à cuire et de la recette propre à chaque utilisateur, suivant qu'il souhaite des qualités gustatives plus proches de celles d'un foie cru ou, inversement, d'un foie en conserve (le degré de cuisson conditionnant également la durée de conservation du produit final après préparation).

Le temps total de cuisson fait donc partie de la recette mais ne dépasse pas, en pratique, une heure pour les préparations de foies gras mi-cuits, pour des gros foies d'oie de 800 à 900 g. Il est en général compris entre 20 et 45 minutes.

Pour que la température ne baisse pas de plus de 5 °C au cours de la cuisson (dans l'hypothèse d'une durée d'une heure), il est nécessaire que la conductivité thermique (linéaire dans la gamme des températures considérées) entre l'intérieur et l'extérieur du récipient 16 soit inférieure à : γ ≤ (m.c + e)/3009 J.s⁻¹ (γ ≤ (m.c+e) / 720 cal.s⁻¹), γ étant déterminé en fonction des valeurs minimales de m et e et de la température désirée. Par exemple, pour une température de cuisson de 50 °C et une terrine de 300 g (foie + récipient), il sera nécessaire d'avoir γ ≤ 1,05 J.s⁻¹ (γ ≤ 0,25 cal.s⁻¹).

Si le récipient 16 présente un isolement thermique moindre, il devra être tenu compte, dans la quantité d'eau pour réchauffer la terrine, d'un supplément e' destiné à compenser les pertes thermiques, dépendant du temps de cuisson s et de la température finale désirée, et égal à : e' = 4,18.γ.s / (100-t) (e' = γ.s / (100-t)) soit, pour γ = 25,08 J (γ = 6 cal.s⁻¹) et une cuisson d'une terrine de 750 g pendant 30 minutes à 65 °C, e' = 514 g, à ajouter à e = 490 g, soit un volume total d'environ 1 litre.

La mise en oeuvre de ces différents facteurs permet le maintien d'une température d'équilibre sensiblement constante (à ± 5 °C typiquement), indispensable à une cuisson satisfaisante.

En pratique, après avoir pesé la terrine remplie de son foie, préparé et assaisonné en toute liberté selon sa propre recette, l'utilisateur opère de la manière suivante, après avoir déterminé la température de cuisson souhaitée :
― dépose de la terrine 10 dans le récipient 16 (éventuellement rapidement ébouillantée au préalable),
― remplissage du récipient doseur 26 de la quantité d'eau bouillante (100 °C) indiquée pour la masse et la température de cuisson correspondantes,
― transvasement de cette quantité d'eau bouillante dans le récipient 16, et fermeture du couvercle 18,
― cuisson, que l'on laisse s'opérer pendant le temps choisi,
― retrait de la terrine 10 hors du récipient 16 une fois la cuisson terminée, terrine que l'on laisse refroidir à température ambiante avant de la mettre au réfrigérateur pour un minimum de deux à trois jours afin d'obtenir, de manière traditionnelle, la maturation du foie après cuisson.

Dans des versions perfectionnées, le système de l'invention peut éventuellement être pourvu de systèmes de thermostatage particuliers, par exemple en prévoyant une résistance électrique thermostatée ou tout autre mode de chauffage contrôlé permettant de maintenir la température constante voulue.

Un autre mode de thermostatage avantageux, ne nécessitant aucune alimentation électrique extérieure, consiste à garnir l'intérieur du récipient 16, et éventuellement du couvercle 18, d'un matériau à changement de phase.

Ces matériaux permettent de réaliser un équilibrage thermique entre l'énergie restituée par le changement de phase du matériau et l'énergie totale perdue par le récipient. De tels matériaux sont par exemple décrits dans le WO-A-93/01250, qui divulgue divers "alliages" moléculaires susceptibles d'emmagasiner et de restituer de l'énergie par le biais de leurs transitions de phases, le plus souvent de solide à liquide, mais aussi, avantageusement, de solide à solide.

On met alors en oeuvre le procédé de l'invention de la manière suivante : remplir le récipient 16 d'eau ; apporter de la chaleur en mettant l'ensemble dans un four, et permettant ainsi de réaliser le changement de phase du matériau 22 ; introduire la terrine dans le récipient et fermer le couvercle 18 ; laisser la cuisson s'opérer le temps nécessaire ; sortir la terrine et la faire refroidir comme précédemment.

Ce procédé nécessite de se fixer une température de cuisson constante (celle du changement de phase) d'une recette à l'autre et d'une terrine à l'autre, et peut être utile pour des fabrications artisanales en petites séries, par exemple dans la restauration.

La quantité de matériau à changement de phase pour permettre la régulation thermique doit être calculée en fonction de l'énergie de changement de phase E, qui doit être suffisante, pendant la durée de la cuisson, pour porter la terrine de la température ambiante à la température désirée ; ainsi, pour une température ambiante de 20 °C, la relation suivante doit être vérifiée : M.E ≥ c.m (t-20).

Dans ce cas, compte tenu du thermostatage, la température de l'eau chaude apportée peut être plus approximative, et l'on peut utiliser par exemple l'eau chaude du robinet, à 60 °C environ, la température précise de cuisson étant déterminée par le thermostatage.

Les utilisations de l'invention ne sont évidemment pas limitées à l'exemple particulier que l'on vient de décrire.

On peut ainsi utiliser le procédé de l'invention pour la cuisson d'un autre aliment tel que le poisson, pourvu que la relation préétablie tienne compte de la chaleur massique de l'aliment à cuire. Celle-ci dépendra de la nature de l'aliment, et devra être établie avec une précision suffisante pour chaque famille d'aliments.

On peut également partir d'un aliment surgelé, conservé typiquement à la température de -18 °C au plus, et plus généralement autour de -20 °C.

Pour passer de cette température à la température de +60 °C, il faut exactement le double de liquide que celle nécessaire pour passer de 20 °C (température ambiante usuelle dans une cuisine) à +60 °C.

Il est donc aisé, avec le procédé de l'invention, de réchauffer des aliments surgelés, voire de les cuire en maintenant pour un temps suffisant la température d'équilibre.

## Revendications

1. Un procédé de cuisson d'un aliment (14), notamment pour la cuisson d'un foie gras entier "mi-cuit" ou d'un poisson, **caractérisé par** les étapes consistant à :
(a) (i) mesurer la masse de l'aliment et placer cet aliment dans un premier récipient (10) formant contenant, (ii) placer l'aliment dans un premier récipient et mesurer la masse de l'ensemble aliment plus premier récipient ou (iii) mesurer la masse de l'aliment,
(b) placer l'aliment, avec l'éventuel premier récipient de l'étape (a), dans un deuxième récipient (16),
(c) porter un liquide tel que de l'eau à une température prédéterminée, notamment à température d'ébullition.
(d) déterminer, en fonction d'une relation préétablie entre la masse de l'aliment, ou la masse de l'ensemble aliment plus premier récipient, et la température moyenne de cuisson souhaitée, une quantité particulière de ladite eau à température prédéterminée,
(e) prélever la quantité particulière (24) d'eau ainsi déterminée et la placer à l'intérieur du deuxième récipient, en contact thermique avec le premier récipient sur la majeure partie de la surface de ce dernier, et
(f) laisser s'opérer pendant une durée prédéterminée la cuisson de l'aliment.

2. Le procédé de la revendication 1, dans lequel ladite relation préétablie inclut comme constantes la chaleur spécifique de l'aliment et ladite température prédéterminée.

3. Le procédé de la revendication 2, dans lequel ladite relation préétablie inclut également comme constantes la masse et la chaleur spécifique du premier récipient.

4. Le procédé de la revendication 1, dans lequel le deuxième récipient forme enceinte calorifugée.

5. Le procédé de la revendication 4, dans lequel ladite relation préétablie inclut également comme constante la quantité de chaleur perdue au cours de la durée prédéterminée du fait d'un calorifugeage imparfait.

6. Le procédé de la revendication 2, dans lequel, le deuxième récipient contenant un garnissage (22) en un matériau à changement de phase, ladite relation préétablie inclut également comme constantes la masse et la chaleur latente du matériau à changement de phase.

7. Le procédé de la revendication 1, dans lequel, l'aliment étant un aliment surgelé, on enchaîne un cycle décongélation/réchauffage à 60 °C/cuisson à 60 °C, en utilisant un volume de liquide approximativement double de celui nécessaire à la mise en température à 60 °C à partir d'une température ambiante de 20 °C.

8. Un nécessaire de cuisson d'un aliment (14), notamment pour la cuisson d'un foie gras entier "mi-cuit" ou d'un poisson par mise en oeuvre du procédé selon les revendications précédentes, comprenant :
― éventuellement, un premier récipient (10) formant contenant,
― un deuxième récipient (16),
― un troisième récipient (26) formant verre doseur, ce troisième récipient portant au moins une graduation (30) constituant une représentation graphique de ladite relation préétablie pour une température de cuisson souhaitée (32).

9. Le nécessaire de la revendication 8, dans lequel le troisième récipient formant verre doseur porte une pluralité de graduations constituant des représentations graphiques respectives de ladite relation préétablie pour différentes températures de cuisson souhaitées, éventuellement pour différents aliments.

10. Le nécessaire de la revendication 8, dans lequel le premier récipient et le deuxième récipient ont des dimensions sensiblement homothétiques entre elles.

11. Le nécessaire de la revendication 8, dans lequel le deuxième récipient contient un garnissage (22) en un matériau à changement de phase.

12. Le nécessaire de la revendication 8, dans lequel le deuxième récipient comporte en outre des moyens pour forcer la convection dans le volume gazeux interne de l'enceinte.

13. Le nécessaire de la revendication 8, dans lequel le premier récipient est pourvu de pieds support (25) propres à ménager entre le fond de ce premier récipient et celui du deuxième récipient un intervalle où pourra pénétrer et circuler l'eau contenue dans ce deuxième récipient.

## Patentansprüche

1. Verfahren zum Garen eines Nahrungsmittels (14), insbesondere für das Garen einer gesamten Gänseleber "halb-gegart" oder eines Fisches, **gekennzeichnet durch** die Schritte bestehend aus:
(a) (i) Messen des Gewichts des Nahrungsmittels und Platzieren dieses Nahrungsmittels in einer ersten Aufnahme (10), welche ein Behältnis bildet, (ii) Platzieren des Nahrungsmittels in einer ersten Aufnahme und Messen des Gewichtes der Gesamtheit Nahrungsmittel plus erster Aufnahme, oder (iii) Messen des Gewichtes des Nahrungsmittels,
(b) Platzieren des Nahrungsmittels mit der optionalen ersten Aufnahme des Schrittes (a) in einer zweiten Aufnahme (16),
(c) Bringen einer Flüssigkeit, wie z.B. Wasser, auf eine vorbestimmte Temperatur, insbesondere auf eine Siedetemperatur,
(d) Bestimmen einer bestimmten Menge des Wassers bei vorbestimmter Temperatur in Abhängigkeit von einer vorbestimmten Relation zwischen dem Gewicht des Nahrungsmittels, oder dem Gewicht der Gesamtheit bestehend aus Nahrungsmittel plus erster Aufnahme, und der gewünschten mittleren Gartemperatur,
(e) Berechnen der besonderen Menge (24) von Wasser so, wie sie bestimmt ist, und Platzieren dieser im Inneren der zweiten Aufnahme in thermischem Kontakt mit der ersten Aufnahme auf dem größeren Teil der Oberfläche dieser letzteren, und
(f) Garenlassen des Nahrungsmittels während einer vorbestimmten Dauer.

2. Verfahren nach Anspruch 1, bei welchem die vorbestimmte Relation Konstanten wie die spezifische Wärme des Nahrungsmittels und die vorbestimmte Temperatur beinhaltet.

3. Verfahren nach Anspruch 2, bei welchem die vorbestimmte Relation auch Konstanten wie das spezifische Gewicht und die spezifische Wärme der ersten Aufnahme beinhaltet.

4. Verfahren nach Anspruch 1, bei welchem die zweite Aufnahme eine isolierende Umschließung bildet.

5. Verfahren nach Anspruch 4, bei welchem die vorbestimmte Relation auch als eine Konstante die im Verlauf der vorbestimmten Dauer aufgrund einer nicht vollkommenen Isolierung verlorene Wärme beinhaltet.

6. Verfahren nach Anspruch 2, bei welchem die zweite Aufnahme eine Verschalung (22) aus einem Material fiir eine Phasenveränderung aufweist, wobei die vorbestimmte Relation auch Konstanten wie das latente Gewicht und die Wärme des Materials für eine Phasenveränderung aufweist.

7. Verfahren nach Anspruch 1, bei welchem, wobei das Nahrungsmittel ein gefrorenes Nahrungsmittel ist, ein Zyklus Auftauen/Aufwärmen auf 60°C/Garen bei 60°C aneinandetgereiht wird unter Verwendung eines Flüssigkeitsvolumens, das näherungsweise das Doppelte ist von jenem, das notwendig ist für ein Bringen auf eine Temperatur von 60°C, ausgehend von einer Umgebungstemperatur von 20°C.

8. Gerät zum Garen eines Nahrungsmittels (14), insbesondere für das Garen einer ganzen Gänseleber "halb-gegart" oder eines Fisches durch Durchführen des Verfahrens gemäß den vorhergehenden Ansprüchen, aufweisend:
- optional eine erste Aufnahme (10), welche ein Behältnis bildet,
- eine zweite Aufnahme (16),
- eine dritten Aufnahme (26), die ein Dosierglas bildet, wobei diese dritte Aufnahme zumindest eine Skala (30) aufweist, welche eine graphische Darstellung der vorbestimmten Relation für eine Temperatur eines gewünschten Garens (32) bildet.

9. Gerät nach Anspruch 8, bei welchem die dritte Aufnahme, die ein Dosierglas bildet, eine Mehrzahl von Skalen trägt, welche jeweilige graphische Darstellungen der vorbestimmten Relation für verschiedene gewtinschte Gartemperaturen, eventuell für verschiedene Nahrungsmittel, bilden.

10. Gerät nach Anspruch 8, bei welchem die erste Aufnahme und die zweite Aufnahme Maße aufweisen, die im wesentlichen homothetisch zueinander sind.

11. Gerät nach Anspruch 8, bei welchem die zweite Aufnahme eine Verschalung (22) aus einem Material für eine Phasenveränderung beinhaltet.

12. Gerät nach Anspruch 8, bei welchem die zweite Aufnahme unter anderem Mittel aufweist, um die Konvektion in dem inneren Gasvolumen der Umschließung zu erzwingen.

13. Gerät nach Anspruch 8, bei welchem die erste Aufnahme mit Stützfüßen (25) versehen ist, die geeignet sind, um zwischen dem Boden dieser ersten Aufnahme und jedem der zweiten Aufnahme einen Abstand vorzusehen, wo Wasser, das in dieser zweiten Aufnahme enthalten ist, eindringen und zirkulieren kann.

## Claims

1. A method of cooking food (14), in particular for cooking part-cooked whole *foie gras* or fish, **characterized by** steps consisting in:
a) i) measuring the mass of the food and placing said mass in a first receptacle (10) forming a container; or ii) placing the food in a first receptacle and measuring the combined mass of the food plus the first receptacle; or iii) measuring the mass of the food;
b) placing the food, optionally together with the first receptacle of step a) in a second receptacle (16);
c) raising a liquid such as water to a predetermined temperature, and in particular boiling temperature;
d) determining a particular quantity of said water at predetermined temperature, as a function of a pre-established relationship between the desired mean cooking temperature and the mass of the food or the combined mass of the food plus the first receptacle;
e) taking the particular quantity (24) of water as determined in this way and placing it inside the second receptacle, in thermal contact with the first receptacle over a major portion of the surface thereof; and
f) allowing the food to cook for a predetermined length of time.

2. The method of claim 1, in which said pre-established relationship includes as constants the specific heat of the food and said predetermined temperature.

3. The method of claim 2, in which said pre-established relationship also includes as constants the mass and the specific heat of the first receptacle.

4. The method of claim 1, in which the second receptacle constitutes a thermally-insulated enclosure.

5. The method of claim 4, in which said pre-established relationship also includes as a constant the quantity of heat lost during the predetermined length of time because the thermal insulation is not perfect.

6. The method of claim 2, in which the second receptacle contains a lining (22) of phase-change material, and said pre-established relationship also includes as constants the mass and the latent heat of the phase-change material.

7. The method of claim 1, in which, for a food that is frozen, a cycle of thawing - heating to 60°C - cooking at 60°C is implemented by using a volume of liquid that is approximately double the volume required for reaching the temperature of 60°C from an ambient temperature of 20°C.

8. A kit for cooking food (14), in particular for cooking a "part-cooked" whole *foie gras* or a fish by implementing the method of the preceding claims, and comprising:
• optionally a first receptacle (10) forming a container;
• a second receptacle (16); and
• a third receptacle (26) forming a measuring jug, said third receptacle carrying at least one graduated scale (30) constituting a graphical representation of said pre-established relationship for a desired cooking temperature (32).

9. The kit of claim 8, in which the third receptacle forming the measuring jug carries a plurality of graduated scales constituting respective graphical representations of said pre-established relationship for different desired cooking temperatures, and optionally for different foods.

10. The kit of claim 8, in which the first receptacle and the second receptacle are of shapes that are substantially similar.

11. The kit of claim 8, in which the second receptacle contains a lining (22) of phase-change material.

12. The kit of claim 8, in which the second receptacle further includes means for forcing convection in the volume of gas inside the enclosure.

13. The kit of claim 8, in which the first receptacle is provided with support legs (25) suitable for leaving a gap between the bottom of the first receptacle and the bottom of the second receptacle into which the water contained in said second receptacle can penetrate and in which it can flow.
